# EUROPÄISCHE PATENTANMELDUNG

(11) **EP 2 790 006 A1**
(43) Veröffentlichungstag der Anmeldung: **15.10.2014**
(21) Anmeldenummer: 13163384.4
(22) Anmeldetag: 11.04.2013
(51) Int. Cl.: G01N 21/47, G01N 15/10

(54) **Verfahren und Kalibriereinheit zur Kalibrierung von streulichtbasierten Partikelmessgeräten**

(71) Anmelder: SAXON Junkalor GmbH, 06846 Dessau-Roßlau (DE)
(72) Erfinder: Manzei, Uwe, 06385 Aken (DE); Egert, René, 39418 Staßfurt (DE); Schapitz, Lutz, 06847 Dessau-Roßlau (DE)
(74) Vertreter: Tragsdorf, Bodo

(57) **Zusammenfassung**

Die Erfindung bezieht sich auf ein Verfahren zur Kalibrierung von streulichtbasierten Partikelmessgeräten, sowie eine Kalibriereinheit.

Ausgehend von den Nachteilen des bekannten Standes der Technik soll ein Verfahren geschaffen werden, das sehr gut reproduzierbare Werte liefert und vergleichsweise in der praktischen Anwendung geringe Kosten verursacht.

Hierzu wird als Lösung vorgeschlagen, dass eine Kalibriereinheit (1), bestehend aus einem Kalibrierstrahler (10) und einem Kalibrierdetektor (11) sowie einer elektronischen Steuer- und Recheneinheit (9), in die Messkammer des Partikelmessgerätes eingebracht wird. Entweder einzeln oder in Kombination werden in zeitlicher Reihenfolge nacheinander
a) zur Prüfung der Strahlungsquelle des Partikelmessgerätes die von dieser abgegebene Strahlungsstärke mittels des Kalibrierdetektors (11) gemessen und
b) zur Prüfung mindestens eines Detektors des Partikelmessgerätes vom Kalibrierstrahler (10) eine Strahlung mit einer vorgegebenen Stärke als Sollwert abgegeben und vom Detektor gemessen.

Die gemessenen Werte gemäß a) werden in der elektronischen Steuer- und Recheneinheit (9) der Kalibriereinheit (1) und gemäß b) in der elektronischen Steuer- und Recheneinheit des Partikelmessgerätes verarbeitet und dem Bediener als Korrekturempfehlung angezeigt und Strahlungsquelle und/oder Detektor nachjustiert.

## Beschreibung

Die Erfindung bezieht sich auf ein Verfahren zur Kalibrierung von streulichtbasierten Partikelmessgeräten, insbesondere zur Messung der Konzentration eines polydispersen Agglomerates in Luft oder Abgasen, sowie eine Kalibriereinheit, insbesondere zur Durchführung des Verfahrens.

Partikelmessgeräte vorgenannter Art sind an sich bekannter Stand der Technik.

Ein entsprechendes Messgerät ist mit einer Lichtquelle ausgerüstet, die Licht in eine Messkammer strahlt, durch die der zu messende Partikelstrom geleitet wird.

Die von den Partikeln reflektierte Strahlung, in der Regel elektromagnetische Strahlung im sichtbaren Bereich, wird einem oder mehreren Detektoren zugeführt. Über den Detektor steht dann ein verstärktes Spannungssignal zur Verfügung. Dieses Spannungssignal ist direkt proportional zur Massenkonzentration des Partikelstromes in der Messkammer. Ausgehend von den ermittelten Spannungssignalen können über Algorithmen verschiedene Parameter des Partikelstroms ermittelt werden. Dies können die Masse der Partikel je Volumeneinheit, die Größenverteilung der Partikel oder andere Parameter sein.

Die Erstjustierung der entsprechenden (Master-)Streulichtgeräte basiert meist auf der Realmessung von Partikeln.

Messgeräte, die für amtliche Messungen bestimmt sind, unterliegen der Eichpflicht und müssen in bestimmten Zeitabständen einer Kalibrierung unterzogen werden.

Die bekannten Lösungen zur Kalibrierung von streulichtbasierten Partikelmessgeräten sind mit erheblichen Nachteilen verbunden. Ein generelles Problem besteht in der Erzeugung einer vergleichbaren Partikelkonzentration.

Aus der Praxis ist die Kalibrierung mit Teststäuben und der Vergleich der Ergebnisse mit gravimetrischen Staubmessgeräten bekannt. Bei kleinen Staubkonzentrationen sind Messungen über lange Zeiträume (bis zu einer Stunde) notwendig, um einigermaßen auswertbare Ergebnisse zu erhalten. Dies ist mit einem hohen Zeitaufwand und erheblichen Kosten verbunden.

Eine andere Möglichkeit zur Partikelstromsimulation besteht darin, über definierte transmittierende oder reflektierende Streukörper definierte Streustrahlungen zu erzeugen, die einer vorgegebenen bekannten Partikelkonzentration entsprechen (DE 10 2011 002 421 A1 und DE 10 2010 002 423 A1). Der Streukörper wird im Bereich des Partikeldurchgangs in die Messkammer eingesetzt und simuliert eine definierte Partikelkonzentration.

Zur Herstellung der Streukörper ist eine hochpräzise Fertigung erforderlich. Die Streukörper sind daher sehr kostenintensiv und wirken sich nachteilig auf die Wirtschaftlichkeit der Kalibrierung aus. Für einen Einsatz in mehreren Prüfstellen erweist sich die Reproduktion des Streukörpers als schwierig.

Aus der DE 10 2011 082 069 A1 ist ein Verfahren zur Kalibrierung eines Streulichtphotometers bekannt. Dieses Kalibrierverfahren nutzt die Rayleigh-Streuung. Ein definiertes partikelfreies Gas wird durch die Messkammer geführt und die Streuung an den Atomen/Molekülen wird zur Kalibrierung des Streulichtmessgerätes genutzt.

Dabei wird wenigstens ein Messwert für die Messgröße an dem Detektor nach Aktivierung der Lichtquelle erfasst und die erfassten Messwerte werden mit einem Kalibrierwert, der für das partikelfreie gasförmige Fluid hinterlegt ist, verglichen.

Nachteilig ist, dass Streulichtmessgeräte ohne geeignete Maßnahmen so gut wie keine Rayleigh-Streuung messen können. Außerdem ist nicht sicher ob eine Kalibrierung mit Rayleigh-Streuung auf Grund anderer physikalischer Grundlagen für auf Mie-Streuung basierende Partikelmessgeräte übertragbar ist.

Der Erfindung liegt die Aufgabe zugrunde, ein Verfahren zur Kalibrierung von streulichtbasierten Partikelmessgeräten zu schaffen, das sehr gut reproduzierbare Werte liefert und vergleichsweise in der praktischen Anwendung geringe Kosten verursacht.

Ferner soll eine in ihrem Aufbau einfache und kostengünstige Kalibriereinheit geschaffen werden, die universell für einen Einsatz in verschiedenen Partikelmessgeräten geeignet ist.

Erfindungsgemäß wird die Aufgabe durch die im Anspruch 1 angegebenen Merkmale gelöst. Vorteilhafte Weiterbildungen der Verfahrensweise sind in den Ansprüchen 2 bis 10 angegeben. Eine geeignete Kalibriereinheit ist Gegenstand des Anspruchs 11. Weitere Merkmale zur Ausgestaltung der Kalibriereinheit sind in den Ansprüchen 12 bis 15 enthalten.

Zur Kalibrierung streulichtbasierter Partikelmessgeräte kommt eine Kalibriereinheit zum Einsatz, die aus einer optischen Einheit und einer elektronischen Steuer- und Recheneinheit besteht. Zur optischen Einheit gehören ein Kalibrierstrahler und ein Kalibrierdetektor sowie gegebenenfalls noch ein Diffusor. Die Kalibriereinheit wird in die Messkammer des Partikelmessgerätes eingebracht.

Zur Prüfung der Strahlungsquelle des Partikelmessgerätes wird die von dieser abgegebene Strahlungsstärke mittels des Kalibrierdetektors gemessen. Die gemessenen Werte werden in der elektronischen Steuer- und Recheneinheit der Kalibriereinheit verarbeitet und dem Bediener als Korrekturempfehlung an der Kalibriereinheit angezeigt.

Zur Prüfung mindestens eines Detektors des Partikelmessgerätes wird vom Kalibrierstrahler eine Strahlung mit einer vorgegebenen Stärke als Sollwert abgegeben und vom Detektor gemessen. Die gemessenen Werte werden in der elektronischen Steuer- und Recheneinheit des Partikelmessgerätes verarbeitet und am Display des Partikelmessgerätes angezeigt. In Abhängigkeit von den ermittelten Messwerten werden Strahlungsquelle und/oder Detektor nachjustiert.

Die Prüfung der Strahlungsquelle bzw. Prüfung eines oder mehrerer Detektoren des Partikelmessgerätes kann entweder einzeln oder in Kombination in zeitlicher Reihenfolge nacheinander vorgenommen werden.

Bei Partikelmessgeräten handelt es sich um Geräte zur Messung von Partikeln unterschiedlicher Art, insbesondere polydispergiertes Agglomerat von Primärteilchen, Partikel aus festen und/oder flüssigen Komponenten.

Das erfindungsgemäße Kalibrierverfahren kann grundsätzlich zur Kalibrierung von Partikelmessgeräten für unterschiedliche Anwendungen zum Einsatz kommen.

Beispielhaft sind folgende Anwendungen genannt:
- Staubmessung nach 1.BlmSchV (Kleinfeuerungsanlagen),
- Staubmessung nach TA-Luft,
- Partikelmessung im Rahmen von Abgasuntersuchungen und
- Staub- und Partikelmessgeräte für den Einsatz in der Prozesstechnik.

Die Erstjustierung der entsprechenden (Master-)Streulichtgeräte basiert in der Regel auf der Realmessung von Partikeln. Die Erstjustierung von Seriengeräten sowie die Nachprüfung im Praxiseinsatz befindlicher Geräte können nunmehr mit dem erfindungsgemäßen Kalibrierverfahren in besonders wirtschaftlicher Weise vorgenommen werden.

Die vorliegende Erfindung basiert auf der Überlegung, dass nicht alle Teile des Messgerätes von Parameteränderungen (z.B. durch Altern, Temperaturschwankungen etc.) betroffen sind. Der unveränderliche Teil der Geräte beinhaltet Baugruppen und Komponenten, an denen auf Grund ihres Aufbaus bzw. ihrer Beschaffenheit keinerlei Änderungen, egal welcher Art (Ausnahme technische Defekte, die aber im Messgerät als Fehler behandelt werden können), auftreten können. Dies betrifft z.B. alle digitalen Signalwege und die implementierte Software und gilt auch für alle Geräte gleicher Bauart.

Der veränderliche Teil besteht aus Komponenten, die auf Grund von äußeren Einflüssen ihre Parameter verändern können. Dabei handelt es sich um die Strahlungsquelle und den bzw. die Detektoren eines Partikelmessgerätes. Nur diese Komponenten müssen im Rahmen der geltenden Vorschriften in bestimmten Zeitabständen einer Kalibrierung unterzogen werden.

Bei einer Prüfung der Strahlungsquelle des Partikelmessgerätes werden die Ergebnisse an der Kalibriereinheit über eine Multifunktionsanzeige visuell als farblich gekennzeichnete Bereiche "zu hohe Leistung", "zu geringe Leistung" und "Leistung korrekt" angezeigt. Ausgehend von diesen Informationen kann der Bediener die Strahlungsstärke der Strahlungsquelle im erforderlichen Maß verändern, also nachjustieren.

Bei einer Prüfung des Detektors wird zuerst am Partikelmessgerät die Betriebsart "Detektorkalibrierung" aktiviert und nach erfolgter Prüfung die gemessene Strahlungsstärke im Display des Partikelmessgerätes angezeigt. Ausgehend von dem angezeigten Messwert wird erforderlichenfalls der Detektor nachjustiert.

Ferner besteht die Möglichkeit, dass die Detektorempfindlichkeit des geprüften Detektors automatisch nachgeregelt wird.

Bei Partikelmessgeräten mit mehreren Detektoren können die einzelnen Detektoren zeitlich nacheinander kalibriert werden oder auch gleichzeitig. Bei letztgenannter Variante werden alle zu prüfenden Detektoren von nur einem Kalibrierstrahler angestrahlt.

Bei einer sogenannten "kombinierten Prüfung" wird zuerst die von der Strahlungsquelle des Partikelmessgerätes abgegebene Strahlungsstärke mittels des Kalibrierdetektors gemessen. Danach schaltet die Strahlungsquelle nach einer definierten Zeitdauer automatisch ab. Die Steuer- und Recheneinheit der Kalibriereinheit erkennt die Betriebsart "kombinierte Prüfung" und berechnet den Sollwert für die vom Kalibrierstrahler abzugebende Strahlungsstärke. Diese wird nachfolgend vom Kalibrierstrahler abgegeben und vom Detektor gemessen, wobei bei Abweichungen vom Sollwert der Detektor nachjustiert wird. Das Kalibrierverfahren kann für Partikelmessgeräte, die auf Basis elektromagnetischer Strahlung oder UV-Strahlung arbeiten, angewendet werden.

Jeder Detektor des Partikelmessgerätes kann an einer oder an mehreren Kennlinienpunkten kalibriert werden, indem vom Kalibrierstrahler sequentiell verschiedene Strahlungsstärken abgegeben werden.

Vorzugsweise wird die Strahlung des Kalibrierstrahlers mittels eines Diffusors aufbereitet. Mittels eines Diffusors wird das Licht bzw. die Strahlung gleichmäßig verteilt.

Mit der erfindungsgemäßen Verfahrensweise und der zugehörigen Kalibriereinheit wird im Vergleich zu bekannten Verfahren und Geräten eine kostengünstige und wiederholbare Möglichkeit, Partikelmessgeräte innerhalb kurzer Zeit (weniger als eine Minute) zu prüfen und zu kalibrieren, bereitgestellt.

Die Anschaffungskosten für die erfindungsgemäße Kalibriereinheit sind im Vergleich zu ansonsten zum Einsatz kommender Geräte deutlich geringer.

Mit der stiftförmigen Kalibriereinheit steht eine Möglichkeit zur Verfügung, prüf- bzw. eichpflichtige im Einsatz befindliche Partikelmessgeräte zu prüfen und ggf. zu kalibrieren/zu eichen. Außer dem Kalibrierstift sind keine weiteren Prüf- oder Verbrauchsmittel notwendig. Die Verfahrensdurchführung für die Kalibrierung ist sehr einfach, da keine Teststäube oder andere Ersatzmittel für Partikelströme benötigt werden.

Von Vorteil ist die universelle Einsetzbarkeit der Kalibrierstifte, zumindest für Geräte unterschiedlicher Baugrößen eines Herstellers. Durch zusätzliche Adapter können die Kalibrierstifte auch für bereits im Einsatz befindliche Partikelmessgeräte angewendet werden. Die erfindungsgemäße Kalibriereinheit für streulichtbasierte Partikelmessgeräte besteht aus einem Gehäuse, in dem eine optische Einheit mit einem Kalibrierstrahler und einem Kalibrierdetektor sowie einer elektronischen Steuer- und Recheneinheit angeordnet sind. Der Kalibrierstrahler ist genau zentrisch und der Kalibrierdetektor parallel versetzt zu dem Kalibrierstrahler angeordnet. Kalibrierdetektor und Kalibrierstrahler ragen in die zentrale Austrittsöffnung, die sich in Einbaulage in der Messkammer des Partikelmessgerätes befindet. Die als Kalibrierstift ausgeführte Kalibriereinheit wird passgenau in die Messkammer des Partikelmessgerätes eingebracht und in endgültiger Einbaulage arretiert. Zusätzlich ist eine Stromversorgung vorgesehen.

Der Kalibrierstrahler und der Kalibrierdetektor sind über Schnittstellen mit der elektronischen Steuer- und Recheneinheit verbunden.

Mit dieser Kalibriereinheit können folgende Prüfungen durchgeführt werden:
- die Prüfung und Kalibrierung des oder der elektromagnetischen (meist optischen) Detektoren vom Entstehungsort des Lichtes (Durchgang der Partikel) bis zum Übergang auf einen digitalen Signalweg;
- die Einstellung des/der Nennwerte und der Linearität durch eine oder mehrere Parameter pro Detektor;
- die Messung der Intensität des die Partikel anstrahlenden Elementes.

Im Bereich der Austrittsöffnung der Kalibriereinheit erweist sich die Anordnung eines einstellbaren Diffusors als vorteilhaft, da das vom Kalibrierstrahler abgegebene Licht gleichmäßig auf den oder die Detektoren verteilt wird.

Die Kalibriereinheit ist vorzugsweise als stiftförmiges Bauteil (sogenannter Kalibrierstift) ausgebildet. Der Kalibrierstift ist in seiner Geometrie auf die Gasauslassöffnung und Messkammer des Partikelmessgerätes abgestimmt. Zur Kalibrierung wird der Kalibrierstift in die Gasauslassöffnung des Partikelmessgerätes eingeführt und in Einbaulage arretiert. Zur manuellen Handhabung des Kalibrierstiftes ist dieser mit einem Handgriff ausgerüstet, der sich an der zur optischen Einheit gegenüberliegenden, nach außen zeigenden Gehäusewand befindet. Außerdem ist am Gehäuse des Kalibrierstiftes eine Statusanzeige vorgesehen. Der Bediener kann die Messergebnisse als Statusanzeige somit unmittelbar am Kalibrierstift ablesen. Die Stromversorgung des Kalibrierstiftes erfolgt über eine Batterie. Im Gehäuse des Kalibrierstiftes ist dafür eine entsprechende Aufnahmeöffnung vorgesehen. Zur Inbetriebnahme des Kalibrierstiftes wird ein dafür vorgesehener Taster betätigt. Im Kalibrierstrahler können als Strahlungsquelle eine oder mehrere LED-Leuchtmittel oder Laserstrahler angeordnet sein.

Die Erfindung soll nachstehend an einem Ausführungsbeispiel erläutert werden. In der zugehörigen Zeichnung zeigen:
- Fig. 1: die Kalibriereinheit in perspektivischer Darstellung,
- Fig. 2: die Kalibriereinheit als Ansicht von unten, in verkleinerter Darstellung,
- Fig. 3: einen Schnitt gemäß der Linie A-A in Fig. 2,
- Fig. 4: ein Funktionsschaltbild zur Kalibrierung der Strahlungsquelle eines Staubmessgerätes,
- Fig. 5: ein Funktionsschaltbild zur Kalibrierung des Detektors eines Staubmessgerätes und
- Fig. 6: ein Funktionsschaltbild zur kombinierten Kalibrierung der Strahlungsquelle des Detektors eines Staubmessgerätes.

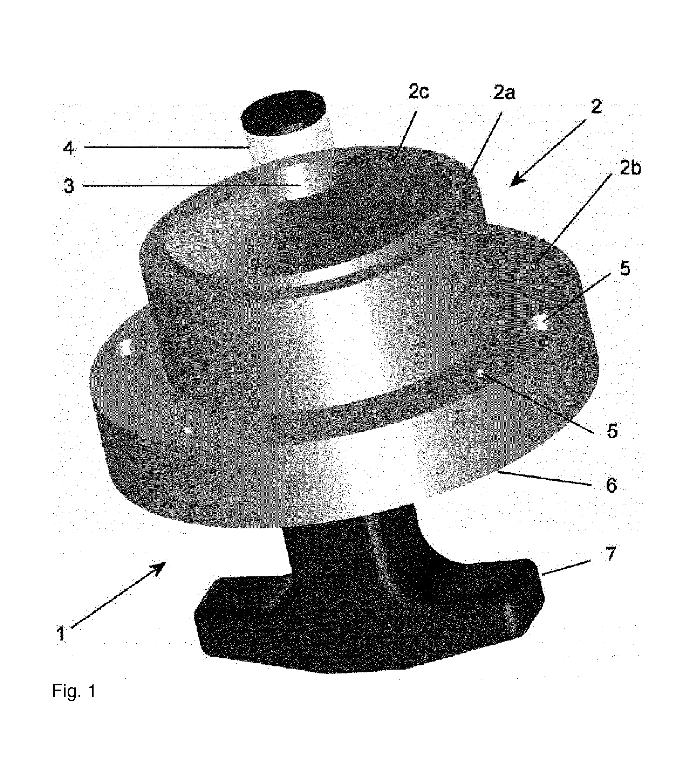

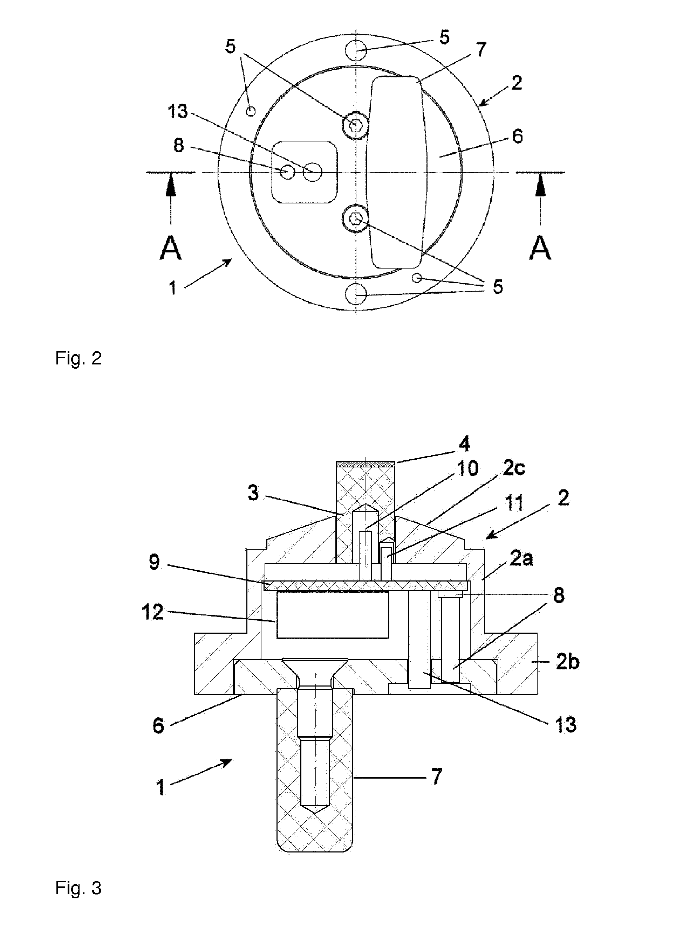

Die in den Figuren 1 bis 3 gezeigte Kalibriereinheit 1 ist als stiftförmiges Bauteil (sogenannter Kalibrierstift) ausgebildet und besteht aus einem ringförmigen Gehäuse 2 mit einem die optischen Komponenten und die Steuer- und Recheneinheit aufnehmenden ersten Abschnitt 2a und einem zweiten Abschnitt 2b als ringförmiger Flansch. An seiner in die Messkammer des Partikelmessgerätes zeigenden Vorderseite ist eine leicht gewölbte Abdeckung 2c angeordnet. In die zentrale Austrittsöffnung 3 ist ein Diffusor 4 eingesetzt. Der ringförmige Flansch 2b besitzt radial verteilt mehrere durchgehende Befestigungslöcher 5 zur Aufnahme von Befestigungselementen für eine Arretierung in der Messkammer. An der nach außen zeigenden Stirnseite 6 des ringförmigen Flansches 2b ist zentrisch ein Handgriff 7 angeordnet. Außerdem befindet sich an der Stirnseite 6 die Multifunktionsanzeige 8 (Fig. 2). Im ersten Abschnitt 2a des Gehäuses 2 sind die Steuer- und Recheneinheit 9 sowie der Kalibierstrahler 10 und der Kalibrierdetektor 11 angeordnet (Fig. 3), die in die zentrale Austrittsöffnung 3 bzw. in den Diffusor 4 ragen und über eine Schnittstelle mit der Steuer- und Recheneinheit 9 in Verbindung stehen. Der Kalibrierstrahler 10 liegt genau in der Mittelachse der Austrittsöffnung 3 und der Kalibrierdetektor 11 ist zu diesem parallel versetzt angeordnet. Kalibrierstrahler und Kalibrierdetektor der Kalibiereinheit sind handelsübliche Bauteile.

Die Stromversorgung der Kalibriereinheit erfolgt über eine in die Aufnahme 12 einsetzbare Batterie in Form einer Knopfzelle. Über einen manuell betätigbaren Taster 13 wird die Kalibriereinheit nach dem Einsetzen in die Messkammer des Partikelmessgerätes und abschließender Arretierung in Betrieb genommen.

Die Kalibriereinheit (ohne Handgriff) hat z.B. folgende Abmessungen: Länge 40 mm, Durchmesser erster Abschnitt 2a 40 mm, Durchmesser zweiter Abschnitt 2b 60 mm.

Vor dem praktischen Einsatz des Kalibrierstiftes bzw. der Kalibriereinheit ist es in an sich üblicher Praxis erst erforderlich, diese zu kalibrieren, also den/die Kalibrierdetektor(en) und Kalibrierstrahler.

Hierzu werden sogenannte Mastergeräte als qualifizierte Partikelmessgeräte eingesetzt. Die in dem Prozessrechner der Mastergeräte implementierte Software enthält die korrekten Berechnungsformeln, abgestimmt auf die Ausgangssignale ihrer Detektoren.

Zur Justierung des/der Kalibrierdetektor(en) werden für die Mastergeräte Detektorausgangswerte definiert, die im Bereich der typischen Ausgangssignale bei der realen Partikelmessung liegen. Die Kalibriereinheit wird nun in die Messkammer des Mastergerätes eingebracht und die Helligkeit des Kalibrierstrahlers so lange angepasst, bis der Detektor genau den definierten Wert liefert. Dieser Vorgang wird sequenziell für jeden Detektor wiederholt. Der Kalibrierstrahler wird mit einem zertifizierten Strahlungsmessgerät eingestellt bzw. kalibriert. Die ermittelten Sollwerte für Kalibrierstrahler und Kalibrierdetektor(en) werden in der Steuer- und Recheneinheit des Kalibrierstiftes gespeichert.

Die nunmehr justierte Kalibriereinheit wird z.B. an Prüfstellen geliefert und zur Prüfung bzw. Kalibrierung von im Einsatz befindlicher Partikelmessgeräte eingesetzt.

Hier beginnt nun die erfindungsgemäße Verfahrensweise.

Zur Prüfung eines Staubmessgerätes wird die Kalibriereinheit in die Messkammer des Staubmessgerätes eingebracht. Das Staubmessgerät wird in den Modus "Sensorkontrolle" versetzt.

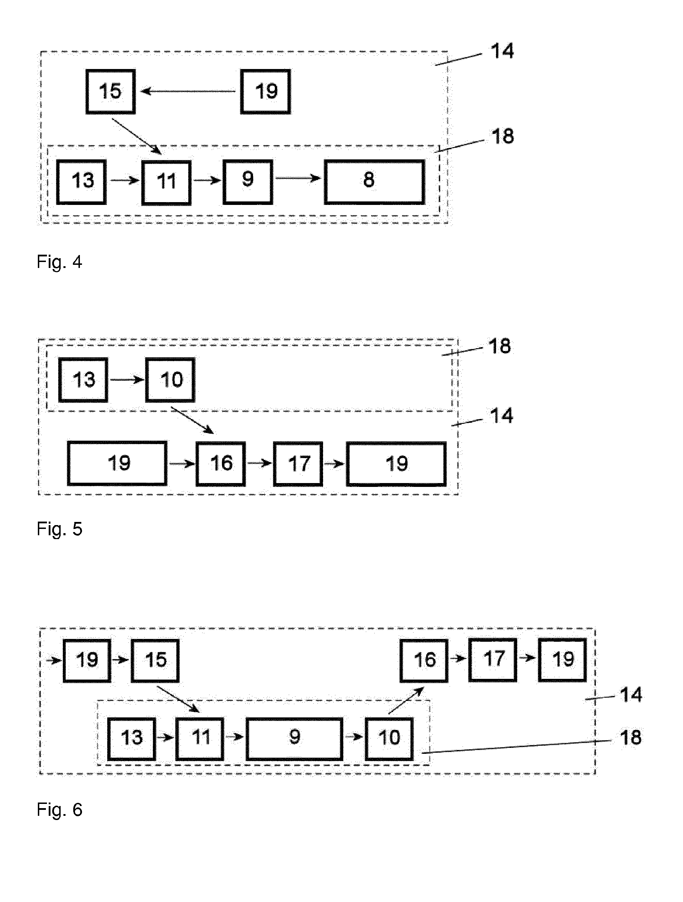

Der Bediener in der Prüfstelle kann nunmehr die Strahlungsquelle und den Detektor des Staubmessgerätes prüfen bzw. kalibrieren, entweder einzeln oder in Kombination. Anstelle eines Detektors können auch mehrere Detektoren nacheinander oder gleichzeitig geprüft werden. Nachfolgend werden die Prüf- bzw. Kalibriervorgänge, unter Bezugnahme auf die in den Figuren 4 bis 6 gezeigten Funktionsschaltbilder, erläutert.

### A Prüfung der Laser-Strahlungsquelle

Wie in Fig. 4 gezeigt, werden vom Bediener am Staubmessgerät 14 die Laser-Strahlungsquelle 15 und durch Betätigung des Tasters 13 die Kalibriereinheit 1 aktiviert. Der in die Messkammer 18 eingesetzte Kalibrierdetektor 11 erkennt das über die Strahlungsquelle 15 gesendete Licht und misst die Lichtstärke als Strahlungsleistung. Die gemessenen Werte (Istwerte) werden in digitale Signale umgewandelt und in der Steuer- und Recheneinheit 9 verarbeitet, wobei ein Vergleich mit den hinterlegten Sollwerten erfolgt. Die Messung erfolgt in der Regel über einen Zeitraum von 30 Sekunden.

Entsprechend den erzielten Ergebnissen wird dem Bediener über die Multifunktionsanzeige 8 der Status des Lasers mittels farblicher Kennzeichnung angezeigt (rot: zu hohe Leistung, orange: zu geringe Leistung, grün: Leistung korrekt).

Der Bediener korrigiert am Bedienpanel 19 des Staubmessgerätes die Laserleistung, bis die grüne Kennzeichnung aufleuchtet.

Die Prüfung der Laser-Strahlungsquelle ist somit abgeschlossen.

### B Prüfung des/der Detektor(en)

Zur Prüfung der Detektoren des Staubmessgerätes 14 wird der Kalibrierstift 1 in die Messkammer 18 eingesetzt und am Bedienpanel 19 des Staubmessgerätes der Modus "Detektorkalibrierung" aktiviert und durch manuelle Betätigung des Tasters 13 der Kalibrierstift 1 in Betrieb genommen (Fig. 5). Dieser erkennt automatisch den gewählten Modus und vom Kalibrierstrahler 10 wird auf jeden zu prüfenden Detektor 16 nacheinander eine Lichtstrahlung definierter Lichtstärke abgegeben. Von jedem Detektor 16 wird die Lichtstärke gemessen und die Messwerte als digitale Signale an die Steuer- und Recheneinheit 17 übermittelt und dem Bediener am Bedienpanel 19 des Staubmessgerätes 14 für jeden Detektor 16 als Zahlwert angezeigt.

Anhand der ausgegebenen Analog-Signale justiert der Bediener den entsprechenden Detektor nach. Mittels einer Vergleichsmessung kann die vorgenommene Justierung nochmals überprüft werden. Sofern eine Nachjustierung erforderlich ist, so erfolgt diese in der Regel beim Hersteller der Geräte.

### C Kombinierte Prüfung von Strahlungsquelle und Detektor(en)

Bei der kombinierten Prüfung wird mittels des in die Messkammer 18 des Staubmessgerätes 14 eingesetzten Kalibrierstiftes die aktuelle Leistung der Laser-Strahlungsquelle 15 ermittelt. Nach dem Einschalten des Staubmessgerätes 14 am Bedienpanel 19 und des Kalibriertstiftes mittels des Tasters 13 sendet die Strahlungsquelle 15 Laserlicht, das vom Kalibrierdetektor 11 gemessen wird (Fig. 6).

Die Strahlungsquelle 15 schaltet nach einer vorgegebenen Zeitdauer automatisch ab. Der Kalibrierstift erkennt den Status "kombinierte Prüfung" und die Steuer- und Recheneinheit 9 ermittelt die vom Kalibrierstrahler 10 abzugebende Lichtstärke (Sollwert). Der Kalibrierstrahler 10 strahlt nachfolgend das Licht auf den/die Detektoren 16, die die Lichtstärke messen und die Messwerte als Signale an die Steuer- und Recheneinheit 17 des Staubmessgerätes weitergeben. Die Messwerte werden dem Bediener am Bedienpanel 19 des Staubmessgerätes 14 angezeigt, bei Abweichungen des Istwertes vom Sollwert für den einzelnen Detektor veranlasst der Bediener die entsprechende Justierung des betreffenden Detektors.

## Patentansprüche

1. Verfahren zur Kalibrierung von streulichtbasierten Partikelmessgeräten, wobei eine Kalibriereinheit (1) mit einer optischen Einheit, bestehend aus einem Kalibrierstrahler (10) und einem Kalibrierdetektor (11), sowie einer elektronischen Steuer- und Recheneinheit (9) in die Messkammer des Partikelmessgerätes eingebracht wird, und entweder einzeln oder in Kombination in zeitlicher Reihenfolge nacheinander,
a) zur Prüfung der Strahlungsquelle (15) des Partikelmessgerätes (14) die von dieser abgegebene Strahlungsstärke mittels des Kalibrierdetektors (11) gemessen wird;
b) zur Prüfung mindestens eines Detektors (16) des Partikelmessgerätes (14) vom Kalibrierstrahler (10) eine Strahlung mit einer vorgegebenen Stärke als Sollwert abgegeben und vom Detektor (16) gemessen wird,
wobei die gemessenen Werte gemäß a) in der elektronischen Steuer- und Recheneinheit (9) der Kalibriereinheit (1) und gemäß b) in der elektronischen Steuer- und Recheneinheit (17) des Partikelmessgerätes (14) verarbeitet und dem Bediener als Korrekturempfehlung angezeigt und Strahlungsquelle (15) und/oder Detektor (16) nachjustiert werden.

2. Verfahren nach Anspruch 1, **dadurch gekennzeichnet, dass** die Ergebnisse der Prüfung der Strahlungsquelle (15) des Partikelmessgerätes (14) an der Kalibriereinheit (1) über eine Multifunktionsanzeige (8) visuell als farblich gekennzeichnete Bereiche "zu hohe Leistung", "zu geringe Leistung" und "Leistung korrekt" angezeigt werden und ausgehend von diesen vom Bediener die Strahlungsstärke der Strahlungsquelle (15) verändert wird.

3. Verfahren nach einem der Ansprüche 1 oder 2, **dadurch gekennzeichnet, dass** zur Prüfung eines Detektors (16) am Partikelmessgerät (14) die Betriebsart "Detektorkalibrierung" aktiviert wird und die gemessene Strahlungsstärke im Display des Partikelmessgerätes (14) angezeigt wird.

4. Verfahren nach einem der Ansprüche 1 bis 3, **dadurch gekennzeichnet, dass** die Detektorempfindlichkeit des geprüften Detektors (16) automatisch nachgeregelt wird.

5. Verfahren nach einem der Ansprüche 1 bis 4, **dadurch gekennzeichnet, dass** mehrere Detektoren (16) des Partikelmessgerätes (14) zeitlich nacheinander kalibriert werden.

6. Verfahren nach einem der Ansprüche 1 bis 4, **dadurch gekennzeichnet, dass** mehrere Detektoren (16) des Partikelmessgerätes (14) gleichzeitig kalibriert werden, wobei alle zu prüfenden Detektoren (16) vom Kalibrierstrahler (10) angestrahlt werden.

7. Verfahren nach einem der Ansprüche 1 bis 6, **dadurch gekennzeichnet, dass** bei einer kombinierten Prüfung zuerst die von der Strahlungsquelle (15) des Partikelmessgerätes (14) abgegebene Strahlungsstärke mittels des Kalibrierdetektors (11) gemessen wird, danach schaltet die Strahlungsquelle (15) nach einer definierten Zeitdauer automatisch ab und die Steuer- und Recheneinheit (9) der Kalibriereinheit (1) erkennt die Betriebsart "kombinierte Prüfung" und berechnet den Sollwert für die vom Kalibrierstrahler (10) abzugebende Strahlungsstärke, die nachfolgend vom Kalibrierstrahler (10) abgegeben und vom Detektor (16) gemessen wird, wobei bei Abweichungen vom Sollwert der Detektor (16) nachjustiert wird.

8. Verfahren nach einem der Ansprüche 1 bis 7, **dadurch gekennzeichnet, dass** das Partikelmessgerät (14) auf Basis elektromagnetischer Strahlung oder UV-Strahlung arbeitet.

9. Verfahren nach einem der Ansprüche 1 bis 8, **dadurch gekennzeichnet, dass** jeder Detektor (16) des Partikelmessgerätes (14) an einer oder an mehreren Kennlinienpunkten kalibriert wird, indem vom Kalibrierstrahler (10) sequentiell verschiedene Strahlungsstärken abgegeben werden.

10. Verfahren nach einem der Ansprüche 1 bis 9, **dadurch gekennzeichnet, dass** die Strahlung des Kalibrierstrahlers (10) mittels eines Diffusors (4) aufbereitet wird.

11. Kalibriereinheit für streulichtbasierte Partikelmessgeräte, insbesondere zur Durchführung des Verfahrens nach einem der vorhergehenden Ansprüche, **dadurch gekennzeichnet, dass** diese aus einem Gehäuse (2) besteht, in dem eine optische Einheit mit einem Kalibrierstrahler (10) und einem Kalibrierdetektor (11) sowie einer elektronischen Steuer- und Recheneinheit (9) angeordnet sind, wobei der Kalibrierstrahler (10) genau zentrisch und der Kalibrierdetektor (11) zu diesem parallel versetzt angeordnet ist und in die zentrale Austrittsöffnung (3) ragen, die Kalibriereinheit (1) passgenau in die Messkammer des Partikelmessgerätes (14) einsetzbar und arretierbar ist und eine Stromversorgung besitzt.

12. Kalibriereinheit nach Anspruch 11, **dadurch gekennzeichnet, dass** im Bereich der Austrittsöffnung (3) ein Diffusor (4) angeordnet ist.

13. Kalibriereinheit nach einem der Ansprüche 11 oder 12, **dadurch gekennzeichnet, dass** diese als stiftförmiges Bauteil (1) ausgebildet ist, das in die Gasauslassöffnung des Partikelmessgerätes (14) einführbar ist und an der zur optischen Einheit gegenüberliegenden, nach außen zeigenden Stirnseite (6) des Gehäuses (2) mit einem Handgriff (7) sowie einer Multifunktionsanzeige (8) für Statusangaben ausgerüstet ist.

14. Kalibriereinheit nach einem der Ansprüche 11 bis 13, **dadurch gekennzeichnet, dass** im Kalibrierstrahler (10) als Strahlungsquelle eine oder mehrere LED-Leuchtmittel oder Laserstrahler angeordnet sind.

15. Kalibriereinheit nach einem der Ansprüche 11 bis 14, **dadurch gekennzeichnet, dass** diese eine Aufnahme (12) zum Einsetzen einer Batterie für die Stromversorgung besitzt.
